# EUROPÄISCHE PATENTSCHRIFT

(11) **EP 3 585 059 B1**
(45) Veröffentlichungstag und Bekanntmachung des Hinweises auf die Patenterteilung: **07.06.2023**
(21) Anmeldenummer: 18178809.2
(22) Anmeldetag: 20.06.2018
(51) Int. Cl.: H04N 21/2187, H04N 21/2343, H04N 21/61, H04N 21/845, H04N 21/222, H04N 21/24

(54) **ÜBERTRAGUNG VON ECHTZEITDATENPAKETEN VON SENDUNGEN AUS DEM INTERNET**
TRANSMISSION OF REAL-TIME DATA PACKETS OF PROGRAMS FROM THE INTERNET
TRANSMISSION DE PAQUETS DE DONNEES EN TEMPS REEL DE PROGRAMMES D'INTERNET

(43) Veröffentlichungstag der Anmeldung: 25.12.2019
(73) Patentinhaber: Deutsche Telekom AG, 53113 Bonn (DE)
(72) Erfinder: Dassow, Heiko, 64347 Griesheim (DE); Dahlheimer, Martin, 63773 Goldbach (DE); Hodzic, Asmir, 55131 Mainz (DE); Reimer, Alexander, 64293 Darmstadt (DE)
(74) Vertreter: Braun-Dullaeus Pannen Emmerling Patent- & Rechtsanwaltspartnerschaft mbB

(56) Entgegenhaltungen:
- US-A1- 2012 284 371
- US-A1- 2013 173 737
- CHARLINE TAIBI ET AL: "Making DASH cache friendly", 107. MPEG MEETING; 13-1-2014 - 17-1-2014; SAN JOSE; (MOTION PICTURE EXPERT GROUP OR ISO/IEC JTC1/SC29/WG11),, Nr. m32269, 11. Januar 2014 (2014-01-11), XP030060721,

## Beschreibung

Die Erfindung betrifft ein Verfahren sowie ein System zur Koordinierung der Übertragung von Echtzeitdatenpaketen von Sendungen, insbesondere von Livestreams.

Streaming-Verfahren, wie beispielsweise das bekannte "http-Live-Streaming", werden sowohl in privaten, geschäftlichen oder auch öffentlichen Bereichen immer häufiger eingesetzt, um Inhalte aus dem Internet für Nutzer auf ihren Endgeräten bereitzustellen. Die Inhalte im Rahmen dieser Erfindung beziehen sich abstrakt formuliert auf Echtzeitdatenpakete. Hierunter ist zu verstehen, dass beispielsweise Live-TV-Sendungen nicht als Ganzes, sondern mittels einer Vielzahl kleinerer Daten-Pakete, welche wiederum zu größeren Segmenten zusammengefasst sein können, zu den Endgeräten der Nutzer übertragen werden. Die entsprechenden Segmente werden zumeist von einem Unternehmen, welches die Live-TV-Sendung anbietet, in ständig aktualisierter Form auf einem Webserver bereitgestellt. Indem die Segmente beständig aktualisiert werden und an das Endgerät übertragen werden, ist es möglich die Live-TV-Sendung auf dem Endgerät darzustellen. Zweckmäßigerweise entspricht die Rate der Aktualisierung einer sogenannten Segmentdauer.

Bei den bekannten adaptiven Streaming-Verfahren werden die Inhalte in eine Folge kleiner, beispielsweise http-basierter, Dateisegmente zerlegt, die mittels sich aktualisierender Verwaltungstabellen, sogenannter Playlists, zueinander in Beziehung gesetzt werden. Jedes Segment weist einen kurzen Abschnitt der Gesamtspielzeit eines Medienobjekts von potentiell mehreren Stunden Dauer, etwa eines Films oder einer Live-Übertragung eines Sportereignisses, auf. Die Inhalte, auch als Sendungen bezeichnet, werden in einer Auswahl verschiedener Qualitätsstufen auf dem Server, beispielsweise einem Webserver, vorgehalten. Hierbei handelt es sich um inhaltlich übereinstimmende Segmente, die jedoch mit unterschiedlichen Bitraten kodiert sind und dadurch einen unterschiedlich großen Datenstrom bei der Übertragung generieren. Bei der Wiedergabe solcher Sendungen wählt das Endgerät, auch als Client bezeichnet, für das nächste Segment aus den in den Playlist angebotenen inhaltsgleichen Alternativen automatisch diejenige Bitrate aus, die ihm unter den derzeitigen Verbindungsbedingungen am besten geeignet scheint. Der Client wählt also das Segment mit der höchstmöglichen Bitrate aus, dass in der verfügbaren Zeit bis zur Wiedergabe übertragen werden kann, ohne dass die Wiedergabe stockt und erst wieder "gepuffert" werden muss. Dadurch kann sich ein Endgerät/Client in vielen Fällen an veränderliche Netzwerkbedingungen anpassen und eine flüssige Wiedergabe gewährleisten. Um die Wiedergabe möglichst zeitnah starten zu können, einen kleinen Übertragungsbuffer im Endgerät füllen zu können und die verfügbare Kapazität nicht gleich am Anfang zu überschreiten, ist es etablierte Praxis, die Übertragung zunächst mit der kleinsten verfügbaren Bitrate zu starten. Solche und ähnliche Verfahren, beispielsweise http-Live-Streaming (RFC 8216-http live streaning.htm), sind in den Patentschriften US 9, 607, 655 B2; US 9, 594, 482 B2 und US 9, 565, 672 B2 und in Dokument US2012/284371 A1 beschrieben.

Besonders wenn die IT-Verbindung zum Server nicht mit einer konstanten Bandbreite bereitgestellt werden kann, ermöglichen es adaptive Streaming-Verfahren, die von den Endgeräten angeforderte Bitrate dynamisch anzupassen, sodass nicht dauerhaft von den Clients die schlechteste Bitrate angefordert werden muss, um das Netz möglichst stabil zu halten. Ein typischer Einsatzzweck dieser adaptiven Verfahren ist es, über einen Webserver, der über eine breitbandige Anbindung verfügt, Videoinhalte über das Internet an Endgeräte in der ganzen Welt zu übertragen. Die erzielbare Bandbreite wird dabei unter anderem durch die Anschlussleitung des Endgeräts, aber gegebenenfalls auch durch die Funkqualität bei WLAN und Mobilfunk beeinflusst. Dadurch, dass die erzielbare Bandbreite direkt am Endgerät überwacht wird, werden diese Schwankungen sofort erkannt und können direkt durch das Endgerät ausgeregelt werden, indem das Endgerät für die darauffolgenden Segmente eine Bitrate wählt, die der verfügbaren Bandbreite möglichst gut entspricht. Die Steuerung, welche Bitrate für das nachfolgende Segment verwendet werden soll, unterliegt ausschließlich dem Endgerät und kann nicht von dem Server beeinflusst werden. Der Server stellt hierbei immer alle möglichen Qualitätsstufen, also die verschiedenen Bitraten, der Segmente einer Live-Sendung zum Abruf bereit und hat keinen Einfluss darauf, welche Qualitätsstufen bzw. Bitraten in welcher Anzahl abgerufen werden.

Vor allem beim http-Streaming können für die Übertragung der Inhalte/Segmente Techniken eingesetzt werden, die auch den normalen Webseitenaufbau beschleunigen. Eine dieser Möglichkeiten ist, den HTTP-Datenverkehr über einen Proxy zu leiten. Ein solcher Proxy ist eine Kommunikationsschnittstelle in einem Rechnernetzwerk. Er arbeitet als Vermittler, der auf der einen Seite Anfragen entgegennimmt, um dann über seine eigene Adresse eine Verbindung zu der anderen Seite herzustellen. Bei den adaptiven Streaming-Verfahren bedeutet dies konkret, dass der Proxy die Kommunikationsschnittstelle zwischen dem Webserver und dem Endgerät, also dem Client, ist. Für das adaptive Streaming-Verfahren sind insbesondere die folgenden zwei Eigenschaften eines Proxys relevant:
- Zwischenspeicher: Der Proxy kann von den Endgeräten gestellte Anfragen nach Datenpaketen an den Webserver bzw. deren Ergebnis in seinem Zwischenspeicher, dem sogenannten Cache, speichern. Wird die gleiche Anfrage von demselben oder einem anderen Endgerät erneut gestellt, kann diese Anfrage direkt aus dem Zwischenspeicher beantwortet werden, ohne zuerst den Webserver anzufragen. Der Proxy stellt sicher, dass die in ihm hinterlegten Informationen nicht übermäßig veraltet sind. Eine vollständige Aktualität wird in der Regel aber nicht gewährleistet. Durch das Zwischenspeichern können Anfragen schneller bearbeitet werden und es wird gleichzeitig die Netzlast verringert. Beispielsweise vermittelt ein derartiger Proxy eines Unternehmens den gesamten Datenverkehr der Rechner der Mitarbeiter mit dem Internet.
- Bandbreitenkontrolle: Der Proxy teilt verschiedenen Benutzern und Gruppen je nach Auslastung unterschiedliche Ressourcen zu. Der Proxy-Server Squid beherrscht dieses Verfahren, wobei er ebenso zum Schutz des Servers beitragen kann und Methoden für bessere Verfügbarkeit nutzt.

Nachteilig neigen die bekannten adaptiven Streaming-Verfahren dazu, dass unterbrechungsfreie Übertragungen an mehrere Endgeräte, die insbesondere bei Live-Sendungen eine gemeinsame Datenverbindung nutzen, mit einer für TV-Sendungen qualitativ guten Bitrate fast nicht möglich sind, wenn die Anzahl der Endgeräte eine kritische Anzahl überschreitet, die von der verfügbaren Bandbreite abhängt. Bei Hotels, deren TV-Geräte http-Live-Streaming aus einer Cloud beziehen, wird diese kritische Anzahl in der Praxis fast immer überschritten. Die Endgeräte nutzen bei den bekannten Verfahren die verfügbare Bandbreite nicht gleichmäßig aus, sondern versuchen individuell die Segmente mit bestmöglicher Bitrate in einer kurzen Zeit herunterzuladen und pausieren danach bis zur Verfügbarkeit des nächsten Segments auf dem Webserver.

Abhängig davon, wie viele Endgeräte über eine gemeinsame Datenverbindung, gegebenenfalls mittels des Proxys, auf den Webserver zugreifen, führt dies zu einer stark schwankenden Auslastung von Netzabschnitten bzw. der gemeinsamen Datenverbindung. Bei der individuellen Nutzung der Datenverbindung durch nur ein Endgerät stellt dies kein Problem dar -jedoch bei der gemeinsamen Nutzung der Datenverbindung durch mehrere Endgeräte, was oft zu Unterbrechungen des Live-TV-Streams führt, da durch die einzelnen Endgeräte in der Summe mehr Bandbreite angefordert wird als zur Verfügung steht. Wenn beispielsweise ein großes Hotel durch eine DSL-Anschlussleitung mit Live-TV versorgt werden soll, so besteht der Bandbreitenengpass in der Regel nicht in dem Übertragungsabschnitt zwischen dem Endgerät und dem Proxy, sondern in der gemeinsam genutzten Datenverbindung zu dem Webserver. Da keine Koordinierung der einzelnen Endgeräte untereinander stattfindet, kann jedes Endgerät nur aufgrund seiner eigenen vorausgegangenen Übertragungen auf die erzielbare Bitrate beim Download des nächsten Segments schließen. So könne Endgeräte, die zeitgleich die gleiche Live-Sendung wiedergeben, unterschiedliche Bitraten auswählen und es so verhindern, dass die übertragenen Inhalte im Zwischenspeicher hinterlegt und mehrfach ausgeliefert werden können. Dieses unkoordinierte Vorgehen der Endgeräte hat letztendlich zur Folge, dass unnötig oft Inhalte auf dem gemeinsamen Netzabschnitt übertragen werden müssen und dass die Bandbreitenreduktion durch eine zwischengeschalteten Cache geringer als erwartet ausfällt.

Zur Illustration sei dies an einem Beispiel erläutert: Über eine 16 Mbit/s DSL-Anschlussleitung werden bereits 20 unterschiedliche Live-Streams mit jeweils 700 kbit/s übertragen. Ein weiteres Endgerät fordert einen Live-Stream an, dessen Inhalt aber schon im Proxy-Cache gespeichert ist. Daher erkennt das weitere Endgerät beim Übertragen des ersten 700 kbit/s Segments aus dem Cache eine vermeintlich verfügbare Bitrate von 50 Mbit/s. Entsprechend versucht dieses Endgerät, nach seinen internen Vorgaben, das zweite Segment mit der Bitrate von 10 Mbit/s herunterzuladen. Obwohl dieses Endgerät schon bald erkennt, dass die Bitrate nicht zur Verfügung steht und die Übertragung nach kurzer Zeit bereits abbricht, reicht dieser gescheiterte Übertragungsversuch bereits aus, auch die Übertragung zu den anderen 20 Endgeräten deutlich zu verzögern, wodurch es auf allen 20 Endgeräten zu einem kurzen Bildstillstand kommen kann.

Es ist die Aufgabe der Erfindung ein Verfahren sowie ein System anzugeben, dass es ermöglicht Live-Streams aus dem Internet an mehrere Endgeräte möglichst unterbrechungsfrei bereitzustellen.

Diese Aufgabe wird durch die unabhängigen Ansprüche 1 und 9 gelöst.

Erfindungsgemäß ist ein Verfahren zur Koordinierung der Übertragung von Echtzeitsegmenten von Sendungen, insbesondere von Live-Streams, aus dem Internet an mehrere Endgeräte zur gemeinsamen Nutzung angegeben. Dieses Verfahren umfasst einen Webserver, auf dem die Echtzeitsegmente der Sendungen in unterschiedlichen Bitraten vorgehalten werden, wobei die Endgeräte mittels eines Proxys, auf dem ein Reglungsalgorithmus implementiert ist, mit dem Webserver verbunden sind. Der Reglungsalgorithmus kann das Herunterladen einer Auswahl der Echtzeitsegmente auf einen Zwischenspeicher, den sogenannten Cache, des Webservers steuern. Jedem Endgerät wird das ihm zugeordnete Echtzeitsegment der Sendung übertragen, wobei ein erstes Endgerät die Echtzeitsegmente einer bestimmten Sendung mit einer ersten Bitrate und ein zweites Endgerät die Echtzeitsegmente derselben Sendung mit einer zweiten Bitrate anfordert.

Der Kern der Erfindung liegt nun darin, dass der Reglungsalgorithmus dem zweiten Endgerät die Sendung mit der ersten Bitrate zuordnet und die entsprechenden Echtzeitsegmente mit der ersten Bitrate an das zweite Endgerät übertragen werden. Dies ermöglicht vorteilhaft, dass nicht jede von den Endgeräten angeforderte Bitrate -sondern eben "nur" eine Auswahl - des Echtzeitsegments einer Sendung in den Zwischenspeicher geladen wird. Diese Auswahl regelt der Proxy vorzugsweise mithilfe des Regelungsmechanismus. Hierdurch wird vorteilhaft verhindert, dass sich die einzelnen Anfragen der jeweiligen Endgeräte zu einem sehr großen Gesamtdatenstrom addieren, welcher insbesondere bei einer Vielzahl von Endgeräten häufig die Breitbandkapazitäten einer ersten Datenverbindung, die zweckmäßigerweise den Proxy mit dem Webserver verbindet, überschreiten würde. Vorteilhaft wird durch dieses Verfahren sichergestellt, dass die Übertragung möglichst ohne Unterbrechungen von statten gehen kann. Als Echtzeitsegment ist hierbei ein sich ständig aktualisierende Datenpaket zu verstehen, dass auf dem Webserver zum Übertragen einer Live-Sendung hinterlegt ist. Typischerweise haben diese Echtzeitsegmente eine Segmentdauer von ca. 10 Sekunden, wobei dies keine Einschränkung der Erfindung darstellen soll, da die Segmentdauer prinzipiell frei wählbar ist. Von dem Proxy können die Echtzeitsegmente mittels einer zweiten Datenverbindung an die Endgeräte, auch Clients genannt, übertragen werden. Im Regelfall ist der Flaschenhals bezüglich des Datenstroms die erste und nicht die zweite Datenverbindung.

Indem der Regelungsalgorithmus zumindest einem der Endgeräte das Echtzeitsegment der identischen Sendung in einer anderen Bitrate als von dem Endgerät angefordert zur Verfügung stellt, wird der Datenstrom effektiv reduziert. Technisch kann dies kann durch entsprechende Einträge in der Verwaltungstabelle realisiert werden. Das erste Endgerät würde also bspw. das Echtzeitsegment mit der Bitrate "groß" anfordern. Der Regelungsmechanismus kann mittels der entsprechenden Einträge in der Verwaltungstabelle erkennen, dass in dem Zwischenspeicher jedoch nur das inhaltlich identische Echtzeitsegment mit der Bitrate "mittel" vorhanden ist und dieses stattdessen über die zweite Datenverbindung an das erste Endgerät übertragen. In diesem Fall stehen also sowohl dem ersten Endgerät als auch dem zweiten Endgerät das Echtzeitsegment mit der Bitrate "mittel" zur Verfügung. Es ist ersichtlich, dass dies zu einer effektiven Reduzierung des Gesamtdatenstroms auf der ersten Datenverbindung führt und gleichzeitig beide Endgeräte unterbrechungsfrei die Live-Sendung übertragen können.

Vorzugsweise werden durch die Auswahl des Reglungsalgorithmus keine identischen Echtzeitsegmente in den Zwischenspeicher geladen. Wenn ein erstes Endgerät ein bestimmtes Echtzeitsegment angefordert hat und dieses schon in den Zwischenspeicher vorhanden ist, kann dieses einem zweiten Endgerät direkt aus dem Zwischenspeicher über die zweite Datenverbindung zur Verfügung gestellt werden, ohne dass das Echtzeitsegment erneut von dem Webserver heruntergeladen werden müsste. Der Datenstrom auf der ersten Datenverbindung wird hierdurch vorteilhaft reduziert ohne einen Qualitätsverlust der Live-Sendung zu bedingen.

Bevorzugt erkennt der Regelungsmechanismus, wenn zumindest zwei Endgeräte Echtzeitsegmente einer identischen Sendung in unterschiedlicher und/oder gleicher Bitrate anfordern. Hierdurch kann der Regelungsmechanismus feststellen, auf welchen Endgeräten die gleichen Sendungen, insbesondere Live-Streams, gesehen werden. Diese Information kann in einer Verwaltungstabelle hinterlegt werden, auf die der Regelungsmechanismus zugreifen kann.

In einer bevorzugten Ausgestaltung der Erfindung werden durch den Reglungsalgorithmus von der zumindest einen identischen Sendung inhaltlich identische Echtzeitsegmente in einer anderen Bitrate in den Zwischenspeicher heruntergeladen als die, welche von zumindest einem der Endgeräte angefordert wurde. Fordert also beispielsweise ein erstes Endgerät ein Echtzeitsegment mit einer sehr hohen Bitrate "groß" und ein zweites Endgerät das inhaltlich identische Echtzeitsegment mit einer kleineren Bitrate "mittel" an, so führt das selektive Herunterladen des Echtzeitsegments mit der Bitrate "mittel" in die Auswahl zu einer Reduzierung des Datenstroms in der ersten Datenverbindung.

In einer vorteilhaften Ausgestaltung vergleicht der Reglungsalgorithmus die gesamte, von den Endgeräten angeforderte, Bitrate mit der verfügbaren Bitrate der ersten Datenverbindung. Gegebenenfalls können Grenzwerte festgelegt werden, ab denen der Reglungsalgorithmus durch die entsprechende Auswahl der herunterzuladenden Echtzeitsegmente eingreift. Fordern beispielsweise nur wenige Endgeräte IP-Traffic über die erste Datenverbindung an und ist die angeforderte gesamte Bitrate mit einem festlegbaren Abstand kleiner als die verfügbare Bitrate, muss der Regelungsmechanismus nicht notwendigerweise eingreifen, um eine unterbrechungsfreie Darstellung der Live-Sendungen zu gewährleisten.

Der Reglungsalgorithmus kann analysieren, wie oft eine bestimmte Sendung in einer bestimmten Bitrate von den Endgeräten angefordert wird und hieraus eine Priorisierung der Live-Sendungen erstellen. Fordern beispielsweise 25 Endgeräte in einem Hotel die Liveübertragung eines Fußballspiels in "mittlerer" Bitrate und 5 Endgeräte jeweils verschiedene Spielfilme über den Live-Stream von TV Programmen in "großer" Bitrate an, so stellt die Priorisierung sicher, dass zur Vermeidung der Überschreitung der Bandbreite der ersten Datenverbindung nicht das Fußballspiel, sondern gegebenenfalls das Herunterladen zumindest einer der Spielfilme in den Cache gestoppt wird. Prinzipiell kann diese Priorisierung aber nach frei festlegbaren Kriterien ausgestaltet sein. Indem das Herunterladen der Echtzeitsegmente in die Auswahl des Zwischenspeichers entsprechend der Priorisierung ausgeführt wird, kann erreicht werden, dass der Datenstrom der ersten Datenverbindung reduziert wird, wobei gleichzeitig einer möglichst große Anzahl an Endgeräten, die von ihnen angefragte Sendung zur Verfügung gestellt bekommen.

Gemäß eines weiteren Aspekts der Erfindung ist ein System zur Koordinierung der Übertragung von Echtzeitsegmenten, insbesondere von Live-Streams, aus dem Internet angegeben, welches zur Durchführung des vorstehend beschriebenen Verfahrens geeignet und ausgebildet ist.

Vorzugsweise umfassen die erste und/oder die zweite Datenverbindung sowohl kabelgebundene als auch kabellose Datenübertragungen. Dies gewährleistet vorteilhaft, dass die Live-Sendungen flexibel über eine jeweils geeignete Übertragungstechnik an das Endgerät geliefert werden können. Da Nutzer beispielsweise häufig als Endgeräte Tablets, Smartphones oder Notebooks verwenden, kann hier eine Funkübertragung mittels WLAN der zweiten Datenverbindung besonders vorteilhaft sein, wohingegen die erste Datenverbindung als eine kabelgebundene Glasfaserverbindung an den Proxy realisiert sein kann.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1: zeigt eine Ermittlung der benötigten Bandbreite für ein Endgerät.
- Fig. 2: zeigt eine gewichtete Ermittlung der durch einen Proxy benötigten Bandbreite.
- Fig. 3: zeigt angebotene Sendungen auf einem Webserver.
- Fig. 4: zeigt angeforderte Segmente eines direkt mit dem Webserver kommunizierenden Endgerätes.
- Fig. 5: zeigt die auf dem Proxy tatsächlich gespeicherten Segmente und deren Mehrfachbenennung.
- Fig. 6: zeigt die an das Endgerät vom Proxy gelieferten Segmente.
- Fig. 7: zeigt die ermittelte Verteilung der Aufrufe der Sendungen mit unterschiedlichen Bitraten.
- Fig. 8: zeigt ein Aktualisierungsintervall einer Datei auf dem Webserver.
- Fig. 9: zeigt ein weiteres Aktualisierungsintervall der Datei auf einem Zwischenspeicher des Proxys bei konstanter Verweildauer in dem Zwischenspeicher.
- Fig. 10: zeigt das Aktualisierungsintervall der Datei aus Fig. 9 bei angepasster Verweildauer in dem Zwischenspeicher.
- Fig. 11: zeigt ein angepasstes Aktualisierungsintervall der Datei auf dem Zwischenspeicher.
- Fig. 12: zeigt eine Tabelle mit mehrfachen Zugriffen der Endgeräte auf die Datei im Zwischenspeicher.
- Fig. 13: zeigt in Tabellenform die Aktualisierung der Datei auf dem Proxy durch einen Zugriff auf den Webserver.
- Fig. 14: zeigt schematisch ein typisches Aufrufverhalten des Endgeräts.
- Fig. 15: zeigt das neuartige Aufrufverhalten des Proxy.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist

Im Rahmen der Beschreibung der bevorzugten Ausführungsbeispiele der Erfindung, wird das der Erfindung zu Grunde liegende Problem noch einmal konkret aufgezeigt, sodass der Zusammenhang mit den Ausführungsbeispielen besser hergestellt werden kann.

Beim bekannten Stand der Technik befinden sich auf einem Webserver im Internet bzw. in der Cloud eine Vielzahl von über HTTP abrufbare Inhalte bzw. Sendungen, die sich regelmäßig ändern, sodass durch diese Inhalte Live-Streams bereitgestellt werden können. Diese Sendungen sollen für eine beliebige Anzahl von Endgeräten, auch Clients genannt, über eine gemeinsame bandbreitenbegrenzte Anschlussleitung zum Abruf zur Verfügung gestellt werden. Hierbei ist darauf zu achten, dass die Endgeräte neue Sendungsinhalte möglichst zeitnah erkennen und laden können. Bisher werden folgende Lösungen verwendet:
- Jedes Endgerät erhält Direktzugriff auf die Cloud und lädt sich die gewünschten Inhalte eigenständig herunter. Dies entspricht der trivialen Lösung ohne Bandbreitenreduktion.
- Die Sendungen werden nur von einem lokalen Proxy geladen, der On-Demand nicht im Zwischenspeicher befindliche Inhalte aus der Cloud lädt.
- Jede Änderung in der Cloud bewirkt automatisiert eine proaktive Übertragung der Sendung.

Folgende erfindungsgemäße Eigenschaften fehlen bei diesen nach dem Stand der Technik realisierten Proxys:
- die Fähigkeit zu erkennen, wie viele unterschiedliche Qualitätsstufen der einzelnen Streams zeitgleich übertragen werden und somit die Möglichkeit die benötigte Gesamtbitrate auf der gemeinsamen Anschlussleitung unabhängig von zeitlichen Schwankungen zu ermitteln.
- Erkennen, dass eine angeforderte Sendung zu einer unzulässigen Überschreitung der Gesamtbitrate führen würde und dafür zu sorgen, dass der Client eine andere Qualitätsstufe anfordert bzw. dass dem Client durch den Proxy mittels einer Verwaltungstabelle eine andere Qualitätsstufe zugeordnet wird, die sich vorzugsweise bereits im Zwischenspeicher befindet.

Das erfindungsgemäße Verfahren beruht auf der Idee, dass nicht immer alle vorhandenen und von den Endgeräten abgefragten Qualitätsstufen tatsächlich auf der gemeinsamen Anschlussleitung, nachfolgend auch als erste Datenverbindung bezeichnet, übertragen werden müssen, wenn stattdessen das zugehörige Echtzeitsegment in einer anderen, insbesondere einer niedrigeren, Bitrate zurückgeliefert wird. Hierzu ist es erforderlich, zunächst die für die einzelnen Sendungen benötigte Bandbreite zu kennen. Daraus kann abgeleitet werden, inwieweit die benötigten Übertragungen parallel möglich sind bzw. um welche Bitrate der Bandbreitenbedarf reduziert werden muss. Darauf basierend ermittelt ein Reglungsalgorithmus, welche Qualitätsstufen nicht mehr ausgeliefert bzw. beim Webserver angefragt werden, um diese Einsparung zu erzielen. Zu beachten ist hierbei eine zumindest teilweise zeitliche Überschneidung der einzelnen durch die Endgeräte angeforderten Echtzeitsegmente. Vorzugsweise ist der zeitliche Abstand in dem die jeweiligen Endgeräte die Sendungen anfordern geringer als die sogenannte Segmentdauer von circa 10 Sekunden.

Diese einzelnen Verfahrensschritte des Ausführungsbeispiels werden nachfolgend getrennt voneinander beschrieben, um dadurch die Abhängigkeit der einzelnen Lösungsbestandteile voneinander auf ein Minimum zu reduzieren und die Möglichkeit aufzuzeigen, dass die einzelnen Merkmale in vielfältiger Weise miteinander kombinierbar sind.

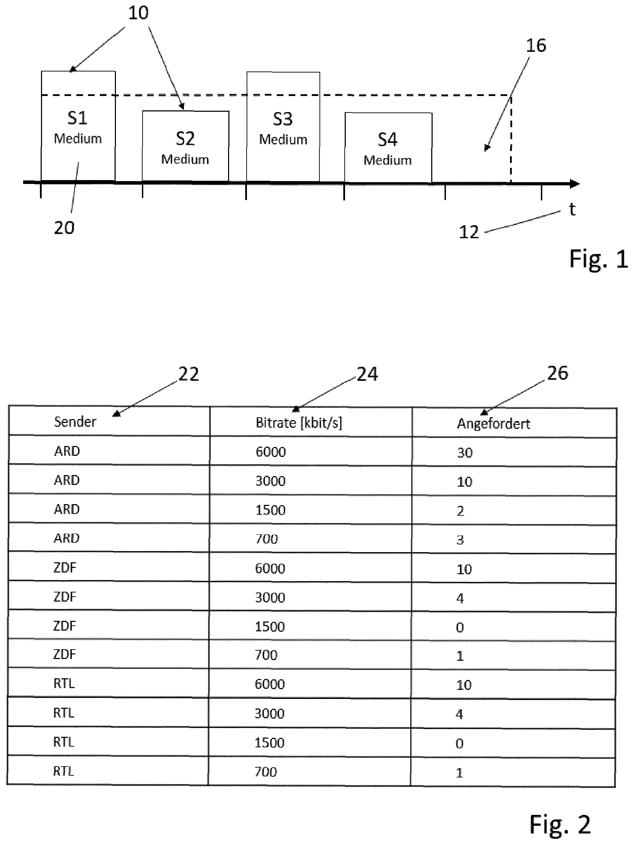

Fig. 1 zeigt die Ermittlung der benötigten Bandbreite für ein Endgerät 100. Die benötigte Bandbreite wird nicht durch die Messung des tatsächlich übertragenen Datenvolumens 10 und der dafür benötigten Zeit 12 ermittelt, sondern dadurch, dass bei jedem Downloadversuch des Endgeräts 100 die zugehörige URL analysiert und dem jeweiligen Stream seine nominale Bitrate zugeordnet wird. Die Summe der angeforderten Bitraten ergibt die benötigte Bitrate. Die URL ist die Adresse mittels derer ein Proxy 110 oder das Endgerät 100die Sendung bzw. Echtzeitsegmente 20 der Sendung von einem Webserver 120 anfordern.

Solange fortlaufend zu der aktuellen Bitrate passende URLs aufgerufen werden, bleibt die ermittelte Bandbreite 14 unabhängig von der exakten zeitlichen Verteilung der Aufrufe unverändert. Sofern für eine bestimmte Dauer 16, die etwas länger als die Segmentdauer des Echtzeitsegments 20 sein sollte, kein URL-Aufruf mehr erfolgt, ist die ermittelte Bandbreite 14 wieder null. Somit lässt sich die durch das Endgerät 100 benötigte Bandbreite unabhängig von möglichen Störeinflüssen bei der Übertragung bereits ermitteln, bevor der eigentliche Download-Vorgang des Echtzeitsegmentes 20 begonnen hat. Auf diese Weise kann bereits vorab entschieden werden, wie mit der aktuellen Download-Anforderung umgegangen werden soll.

Technisch wird das realisiert, indem die erkannten Verbindungen in einer Verwaltungstabelle auf einem Zwischenspeicher des Proxys 110 gespeichert werden. Regelmäßig wird diese Verwaltungstabelle geleert und der bisherige Inhalt in einem temporären Archiv zwischengespeichert. Bei jedem URL-Aufruf wird geprüft, ob die Verbindung schon in einer der beiden Verwaltungstabelle gespeichert ist. Wenn nein, dann handelt es sich um eine neue Verbindung des Endgeräts 100, die durch den Reglungsalgorithmus berücksichtigt wird. In beiden Fällen wird sichergestellt, dass die Verbindung in die Verwaltungstabelle eingetragen wird, sofern die Verbindung noch nicht in der Verwaltungstabelle stand oder durch das Leeren nicht mehr drinsteht. Eine beendete Verbindung wird dadurch erkannt, dass das bestehende temporäre Archiv vor dem erneuten Leeren der Tabelle daraufhin geprüft wird, welcher Eintrag nur noch dort vorhanden ist.

Fig. 2 zeigt eine gewichtete Ermittlung der durch den Proxy 110 benötigten Bandbreite. Da der Proxy 110 mehrfach angeforderte Echtzeitsegmente 20 nur einmal laden muss, ist die benötigte Bandbreite auf der ersten Datenverbindung 115 ggf. kleiner als die Summe der Bandbreite der Endgeräte 100. Basierend darauf, dass für ein einzelnes Endgerät 100 zuverlässig erkannt werden kann, wann eine Übertragung beginnt und endet, kann für jede Sendung 22 mitgezählt werden, wie oft eine bestimmte Bitrate 24 angefordert wird - die Anforderungen ist in Spalte 26 aufgeführt. Somit können alle Bitraten 24 mit mindestens einem aktivem Endgerät 100 aufsummiert werden und die benötigte Gesamtbitrate ermittelt werden. Insbesondere im Falle der Überschreitung einer vorgegebenen Bandbreite kann zusätzlich ermittelt werden, welche Sendungen 24 von besonders vielen Endgeräten 100 bezogen werden. Diese Sendungen 24 können bevorzugt priorisiert werden.

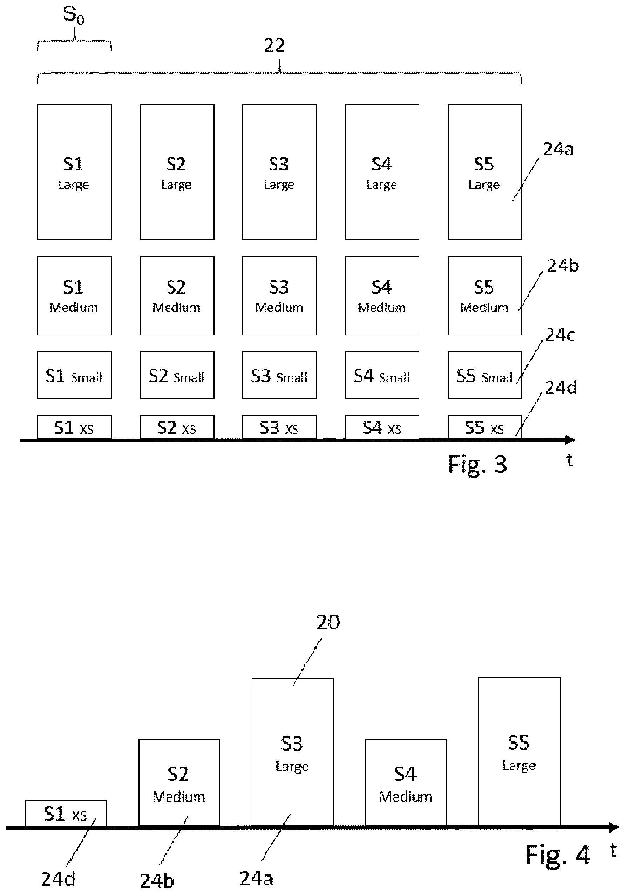

Fig. 3 zeigt angebotene Sendungen 22 auf dem Webserver 120. Sofern keine Bandbreitenreduktion stattfindet, sind die über den Proxy 110 angebotenen Sendungen 22 identisch mit den auf dem Webserver 120 angebotenen Sendungen 22. Über Verwaltungstabellen, die auf dem Proxy 110 hinterlegt sind, hat das Endgerät 100 Zugriff auf alle Echtzeitsegmente 20, wobei ein einzelnes Endgerät 100 pro Segmentdauer S₀ nur ein Echtzeitsegment 20 mit einer einzelnen Bitrate anfragt und benötigt.

Fig. 4 zeigt die angeforderten Echtzeitsegmente 20 des direkt mit dem Webserver 120 kommunizierenden Endgerätes 100. Die tatsächlich vom Endgerät 100 wiedergegebene Qualität kann z.B. nach dem Einschalten mit der kleinsten Qualitätsstufe "XS" 24d beginnen und danach zwischen "Large" 24, der besten Qualitätsstufe, und "Medium" 24b schwanken.

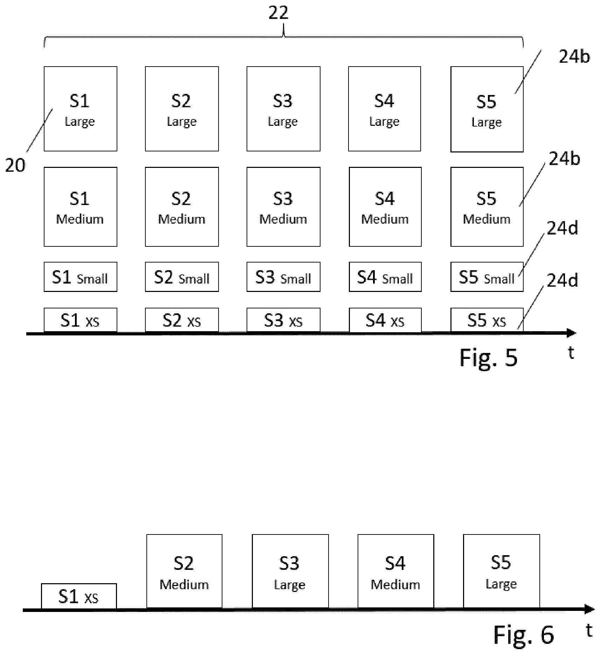

Eine Reduktion des Bandbreitenbedarfs einer in mehreren Bitraten 24a, b, c, d übertragenen Sendung 22 in Echtzeit ist in Fig. 5 gezeigt. Die für die Übertragung der angeforderten Qualitätsstufen benötigte Bandbreite lässt sich vorab dadurch reduzieren, dass auf dem Proxy 110 weniger Bitraten 24 bereitgestellt werden oder insbesondere auf das Anbieten der höchsten Bitrate 24a verzichtet wird. Die Größe der grafischen Darstellung der Blöcke der Echtzeitsegment 20 in den Figuren korreliert mit ihren Qualitätsstufen. Wenn sich das Endgerät 100 jedoch bereits für eine der angebotenen Bitraten 24 entschieden und das zugehörige Segment angefordert wurde, dann "muss" das Segment 20 mit diesem Inhalt zumindest nominell auch geliefert werden, da andernfalls das Endgerät 100 die Sendung 22 nicht flüssig wiedergeben kann. Hier kann der Proxy 110 dadurch eingreifen, dass er bereits alle angeforderten Bitraten 24 für ein bestimmtes Segment 20 mittels der Verwaltungstabelle "kennt". Anstelle in allen Fällen exakt die angeforderte Bitrate 24 zu liefern, kann der Proxy 110 stattdessen eine andere Bitraten 24 als angefordert an eines der Endgeräte 100 liefern und somit die Anzahl der zu übertragenden Bitraten 24 reduzieren. In Fig. 5 ist zu sehen, dass der Block "S5 Large" in der Verwaltungstabelle absichtlich "falsch" bezeichnet wurde. Es handelt sich nämlich eigentlich um einen internen Link zu dem "S5 Medium" Echtzeitdatensegment 20. Fragt das Endgerät 100 also "S5 Large" an, wird ihm technisch das Echtzeitdatensegment 20 "S5 Medium" bereitgestellt. Die entsprechenden Zuordnungen bzw. URL-Links können durch die Verwaltungstabelle realisiert werden. Eine niedrigere Bitrate 24 als gefordert wird auf jeden Fall von dem Endgerät 110 übertragen werden können. Eine höhere Bitrate 24 als gefordert ist technisch nur dann sinnvoll, wenn aufgrund von bekannten Randbedingungen davon ausgegangen werden kann, dass es zwischen Proxy 110 und dem Endgerät 110 zu keinem Bandbreitenengpass auf einer zweiten Datenverbindung 105, die beide verbindet, kommen kann

Wie in Fig. 5 zu erkennen ist, wird an das Endgerät 100, wenn es die höchste Bitrate "Large" 24a anfordert, höchstens die Bitrate "Medium" 24b ausgeliefert, da nicht alle Bitraten 24 auf den Zwischenspeicher des Proxys 110 geladen und vorhanden sind. Über die Verwaltungstabelle wird dem Endgerät 100 also quasi vorgegaukelt, dass die angeforderte Bitrate "Large" 24a geliefert würde, wohingegen in Wahrheit das Endgerät 100 die Bitrate "Medium" 24b geliefert bekommt. Eine Möglichkeit der Umsetzung ist die in Fig. 5 gezeigte Mehrfachbenennungen für Segmente 20 mit der gleichen Bitrate 24. Auch wenn eine Bandbreitenreduktion stattfindet, hat das Endgerät 100 über die Verwaltungstabellen Zugriff auf alle Sendungen, wobei es weiterhin pro Segmentdauer S₀ nur eine Qualitätsstufe benötigt. Insofern scheint sich für das Endgerät 100 in Bezug auf die übertragenen Inhalte nichts zu ändern auch wenn es keinen Unterschied mehr zwischen den Bitraten "Large" 24a und "Medium" 24b sowie zwischen "S" 24c und "XS" 24d gibt.

Fig. 6 zeigt die an das Endgerät 100 vom Proxy 110 tatsächlich gelieferten Echtzeitsegmente 20. Die vom Endgerät 100 angeforderte Qualität variiert nach dem Einschalten nominell zwischen "Large" und "Medium", wobei diesem tatsächlich ab dem zweiten Echtzeitsegment 20 nur die Bitrate "Medium" 24b geliefert wird und demzufolge auch nur diese Qualitätsstufe wiedergegeben werden kann.

Dieses Ausliefern der "falschen" Bitrate 24 stellt insofern eine prinzipielle Verletzung des vom Endgerät 100 erwarteten Verhaltens bei einem HTTP-Download dar. Wenn ein Segment 20 via URL mit einer eindeutig festgelegten Qualitätsstufe geladen wird, dann geht das Endgerät 100 davon aus, dass es auch das Echtzeitsegment 20 mit dieser Bitrate 24 erhält und nicht eine andere Qualitätsstufe, die mittels einer anderen URL zu adressieren gewesen wäre. Es zeigt sich jedoch, dass dieses für das Endgerät 100 technisch kein Problem darstellt, da die Verwaltungstabellen unverändert bleiben und hinter jeder dort aufgeführten URL auch weiterhin eine Datei geliefert wird. Die Tatsache, dass ein angefordertes Echtzeitsegment 20 eine andere Dateigröße hat, als aufgrund der nominalen Bitrate 24 in den Verwaltungstabellen zu erwarten gewesen wäre, hat auf das prinzipielle Verhalten des Endgeräts 100 keine Auswirkung. Hier ist vom Vorteil, dass das Endgerät 100 offensichtlich nicht prüft, ob der erwartete Inhalt des Segments 20 in der korrekten Qualitätsstufe zurückgeliefert wurde und immer nur den Quotienten aus übertragenem Inhalt und benötigter Zeit betrachtet und so trotz einer deutlich anderen Dateigröße als erwartet, korrekt auf die verfügbare Bandbreite rückschließen kann.

Die Idee hinter dem Regelalgorithmus zur selektiven Bandbreitenreduktion besteht darin, die Reduktion der Bandbreite rechtzeitig genug zu starten, sodass es bei den Endgeräten 100 nicht zu einer Unterbrechung des Live-Streams kommt, aber gleichzeitig nicht unnötig restriktiv die Qualität für die Endgeräte 100 von Nutzern herunterzusetzen. Hierzu werden durch den Regelalgorithmus fortwährend folgende Daten erfasst und ausgewertet:
- Welche Bandbreite wird benötigt, wenn alle Bitraten 24 übertragen werden?
- Welche Bandbreite wird benötigt, wenn nur eine reduzierte Anzahl von Bitraten 24 übertragen wird?
- Welche Bandbreite wird aktuell für die tatsächlich angeforderten Bitraten 24 benötigt?
- Welche Bandbreite wird aktuell für die tatsächlich übertragenen Bitraten 24 benötigt?
- Anzahl der Endgeräte 100, die aktuell die gewünschte Bitrate 24 erhalten.
- Anzahl der Endgeräte 100, die aktuell eine reduzierte Bitrate 24 erhalten.

Basierend auf einer gewichteten Ermittlung der durch den Proxy 110 benötigten Bandbreite ist bekannt, welcher Stream in welcher Qualitätsstufe wie oft benötigt wird. Hieraus lassen sich also die Sendungen 22 und Bitraten 24 ermitteln, die besonders selten benötigt werden. Bereits vorab lässt sich festlegen, welche Qualitätsstufen bzw. Bitraten 24 im Falle der Bandbreitenreduktion abgeschaltet werden dürfen. Hierzu können im Vorfeld beispielsweise mit einem Kunden entsprechende Konfigurationsdateien individuell vereinbart werden. Zweckmäßig wird, beginnend mit der Sendung, die von der niedrigsten Anzahl an Endgeräten 100 angefordert wird, eine der Qualitätsstufen dieser Sendung abgeschaltet, bis die benötigte Bandbreite innerhalb eines gesetzten Rahmens liegt. Diese Berechnung muss fortlaufend aktualisiert werden.

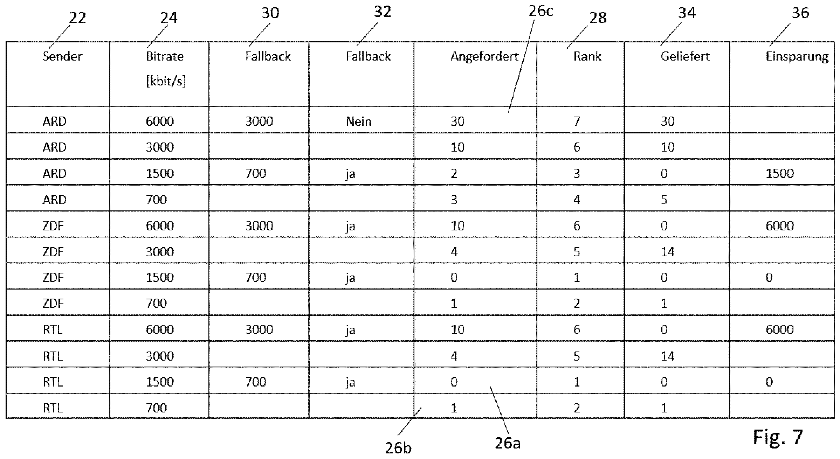

Die Tabelle in Fig. 7 zeigt die Anzahl der Aufrufe der einzelnen Sendungen 22 nach Bitraten 24 aufgeteilt. Die Zelle 26a zeigt, dass die Sendung des Senders RTL mit einer Bitrate von 1500 kbit/s kein einziges Mal aufgerufen wird und demnach keinen Datenstrom auf der ersten Datenverbindung verursacht. In der Zelle 26b ist zu sehen, dass die Sendung des Senders RTL mit einer Bitrate 24 von 700 kbit/s einmal angefordert wird. Zweckmäßigerweise würde beispielsweise diese Zeile bei einer Priorisierung weniger stark berücksichtigt werden als die Zeile mit der Zelle 26c, wo der Sender ARD mit einer Bitrate 24 von 6000 kbit/s 30 mal angefordert wird. Die Spalte 28 zeigt eine mögliche Priorisierung in der Form von Rängen an, wobei eine größere Zahl angibt, dass die Bitrate 24 der entsprechenden Zeile höher priorisiert ist. Die Spalte 30 gibt an, welche Bitrate 24 einer Sendung alternativ, anstelle der von dem Endgerät 100 angeforderten, an das Endgerät 100 geliefert werden soll. Dies bedeutet konkret, dass für den Sender ARD anstatt einer angeforderten Bitrate von 6000 kbit/s alternativ die Bitrate 3000 kbit/s übertragen werden kann. Die Spalte 32 hingeben gibt an, ob die in Spalte 30 angegebene "Fallback" Bitrate 24, auch tatsächlich technisch umgesetzt werden soll. Je nach Kundenwünschen kann dies bei verschiedenen Konfigurationsdateien unterschiedlich ausgestaltet sein. Vorliegend ist in der Zelle 32a zu erkennen, dass die höchste Bitrate des Senders ARD immer geliefert werden soll. Die Zelle 32b zeigt dahingegen, dass für die Bitrate 24 1500 kbit/s zur Reduktion der Bandbreite die geringere Fallback Bitrate 24 von 700 kbit/s geliefert werden soll. Die Spalte 34 gibt an, welche Bitraten 24 tatsächlich in welcher Anzahl geliefert werden und die Spalte 36 zeigt die hieraus resultierende Einsparung des Datenstroms der ersten Datenverbindung 115.

Im exemplarischen Beispiel der Tabelle aus Fig. 7 ist festgelegt, dass 20.000 kbit/s nicht überschritten werden soll. Bei den vorliegenden Werten der Tabelle berechnet der Reglungsalgorithmus folgende Werte:
- benötigte Bandbreite für alle Bitraten = 33.600
- benötigte Bandbreite bei reduzierter Anzahl an Qualitätsstufen, was der Summe über die Spalte 30 entspricht = 11.100
- benötigte Bandbreite für angeforderte Bitraten = 30.600
- benötigte Bandbreite für tatsächlich übertragene Bitraten = 17.100
- Anzahl der Endgeräte 100, die die gewünschte Bitrate erhalten = 53
- Anzahl der Endgeräte 100, die eine reduzierte Bitrate erhalten = 22

Es zeigt sich an diesem Beispiel, dass bei aktueller Nutzung 70% aller Clients die gewünschte Qualitätsstufe erhalten können, dass aber trotzdem rund 44% der eigentlich benötigten Bandbreite eingespart werden kann, wodurch die Sendungen unterbrechungsfrei übertragen werden können, da die erste Datenverbindung 115 nicht überlastet ist. Da die Festlegung, welche Qualitätsstufen übertragen werden sollen, einer kontinuierlichen Anpassung durch den Reglungsalgorithmus unterliegen, können einzelne Echtzeitsegmente 20 in der gewünschten Qualität bereits ganz oder teilweise im Zwischenspeicher liegen. In einem solchen Fall wird unabhängig von der Festlegung des Reglungsalgorithmus der angeforderte Inhalt aus dem Zwischenspeicher ausgeliefert und nicht erst eine schlechtere Qualitätsstufe vom Webserver 120 geladen.

Dass Bandbreite dadurch eingespart werden kann, indem niedrigere Qualitätsstufen als eigentlich gefordert übertragen werden und dass das Endgerät 100 dadurch nicht überlastet wird, ist einsichtig. Es ist allerdings überraschend, dass eine Reduktion des Datenstroms auch dadurch erreicht wird, indem statt der angeforderten Bitrate, eine höhere Qualitätsstufe geliefert wird. Die Reduktion wird dadurch erzielt, dass die höhere Qualitätsstufe an ein anderes Endgerät 100 geliefert wird und beide Endgeräte 100 nunmehr das Echtzeitsegment 20 mit der höheren Qualitätsstufe von dem Proxy 110 geliefert bekommen. Der Datenstrom wird reduziert, da nicht zusätzlich noch das Echtzeitsegment 20 mit der niedrigeren Qualität geladen wird. Damit dies nicht zu einer Störung der Bildwiedergabe der Sendung führt, muss sichergestellt sein, dass die höhere Bandbreite auch Ende zu Ende über die zweite Datenverbindung 105 an das Endgerät 100 übertragen werden kann. Bezogen auf die zweite Datenverbindung zwischen Endgerät 100 und Proxy 110 kann das entweder durch das Design des Netzes, also z.B. ein ausreichendes dimensioniertes Gbit/s LAN, erfolgen oder durch eine fortlaufende proxyseitige Überwachung, der mit diesem Endgerät 100 erzielbaren Bitrate.

Bezogen auf die erste Datenverbindung 115 vom Proxy 110 zum Webserver 120 wird einerseits das Einhalten der maximalen Bandbreite überwacht und zum anderen wäre diese Qualitätsstufe nicht von einem anderen Endgerät 100 angefordert worden, wenn die Kapazität nicht reichen würde. Technisch wird hierdurch ermöglicht, einem Endgerät 100, der sich langsam der bestmöglichen Bitrate 24 nähert, gleich bessere Qualitätsstufen als gefordert zu liefern und dadurch bisher nicht benötigte Qualitätsstufen auch weiterhin nicht zu übertragen. Sofern Endgerät 100 aber beispielsweise via WLAN angebunden sind oder durch parallele Aufgaben gefordert sind, sollten höherer Qualitätsstufen nie ohne Aufforderung des Endgeräts 100 übertragen werden.

Optimierung des Zwischenspeicherverhaltens durch kontextabhängige Zwischenspeicher-Aktualisierung: Bei Zwischenspeichern gibt es drei unterschiedliche Zugriffsmuster:
1. Eine aktuelle Fassung einer Datei, welche insbesondere das Echtzeitdatensegment 20 sein kann, liegt im Cache, also dem Zwischenspeicher, und wird ungeprüft als aktueller Inhalt zurückgeliefert.
2. Es wird zunächst geprüft, ob die im Cache befindliche Version der Datei noch aktuell ist und erst dann wird wahlweise die lokale Datei aus dem Cache des Proxys 110 oder die entfernte Datei aus dem Webserver 120 als aktuelle Datei an das Endgerät 100 zurückgeliefert.
3. Es befindet sich keine aktuelle Version der Datei im Cache und es wird die entfernte Datei vom Webserver 120 an das Endgerät 100 zurückgeliefert.

Bei adaptiven Streaming-Inhalten lässt sich das Verhalten des Zugriffsmusters dahingehend optimieren, dass in Abhängigkeit von Dateityp, Zeitpunkt der letzten Überprüfung und Zeitpunkt der letzten Aktualisierung entschieden wird, ob eine Überprüfung der Aktualität des Cacheinhaltes notwendig ist, wodurch der IP-Traffic abermals reduziert werden kann.
- Das jeweilige Echtzeitsegment 20, also z.B. die *.ts Datei bei HLS (HTTP Live Streaming), ist bezüglich einer konkreten Zugriffsadresse unveränderlich - aber es gibt regelmäßig neue Echtzeitsegment mit jeweils zuvor unbenutzten Zugriffsadressen. Es kann darauf verzichtet werden, die Aktualität zunächst beim entfernten Webserver 120 zu prüfen und jedes im Cache befindliche Echtzeitsegment 20 kann sofort an des Endgerät 100 zurückgeliefert werden.
- Die Verwaltungsdatei bei On-Demand-Inhalten sowie auch die Einstiegsdatei von HLS sind ebenfalls unveränderlich.
- Die Verwaltungsdatei bei Live-Streaming, also bei HLS die *.m3u8 Datei, aktualisiert sich zyklisch mit jedem neuen Echtzeitsegment 20. Der Aktualisierungszyklus entspricht somit der gewählten Segmentdauer S₀. Jeder einzelne Client 100 kennt aber nicht den exakten Aktualisierungszeitpunkt und versucht unabhängig davon, einfach in einem der Segmentdauer S₀ entsprechenden festen Taktabstand eine aktualisierte Version zu laden. Somit ist hier eine angepasste Cache Strategie sinnvoll.

Im Folgenden wird am Beispiel der *.m3u8 Datei mit einem Aktualisierungsintervall von 10 Sekunden die zugehörige Cache-Strategie erläutert:

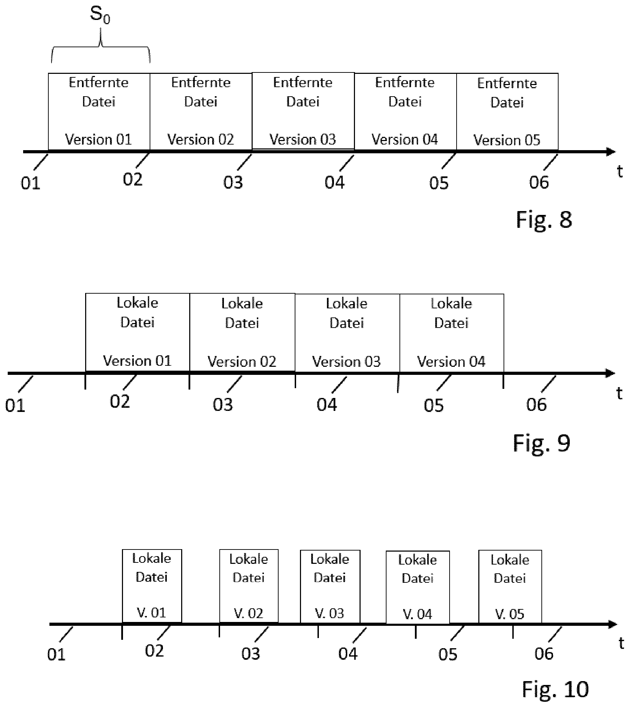

In Fig. 8 ist gezeigt, dass für eine Segmentdauer S₀ von 10 Sekunden alle 10 Sekunden eine neue Version der Verwaltungsdatei auf dem Webserver 120 vorgehalten wird. Die Segmentdauer S₀ kann prinzipiell frei festgelegt werden, sodass die beispielhaft verwendete Angabe von 10 Sekunden keine Beschränkung der Erfindung darstellen soll.

Fig. 9 zeigt das Aktualisierungsintervall der Datei auf dem Zwischenspeicher des Proxys 110 bei konstanter Verweildauer in dem Cache. Sollte der zunächst naheliegende Ansatz gewählt werden, das Updateintervall im Cache in Analogie zum Clientverhalten gleich der Segmentdauer S₀ zu wählen, so würde der erste Zugriff eines Endgeräts 100 festlegen, mit welchem Zeitversatz die lokalen Dateien auf dem Proxy 110 verfügbar sind. Selbst wenn kurz nach dem Zeitpunkt "02" ein weiteres Endgerät auf diese Datei zugreifen würde, würde somit noch die Version "01" vom Cache als aktuell ausgeliefert werden.

Fig. 10 zeigt das Aktualisierungsintervall der Datei aus Fig. 9 bei angepasster Verweildauer in dem Zwischenspeicher. In Fig. 10 erfolgt das erste Update der Datei bereits nach 5 Sekunden Verweildauer im Cache, hierbei würde der erneute Zugriff eines weiteren Endgeräts 100 ggf. eine vorzeitige Aktualisierung des Cacheinhaltes bewirken, wodurch sich der Zeitversatz zum entfernten Webserver 120 verringert. Insgesamt ist aber bei allen diesen bekannten Cache-Strategien zu erkennen, dass eine signifikante zusätzliche Verzögerung dadurch entsteht, dass nicht immer die Aktualität der Datei geprüft wird. Außerdem wir jedes Endgerät100, das zu Anfang die nicht aktuelle Verwaltungsdatei geladen hatte, dauerhaft eine zusätzliche Verzögerung zum Live-Signal haben, die maximal der Segmentdauer S₀ entsprechen kann.

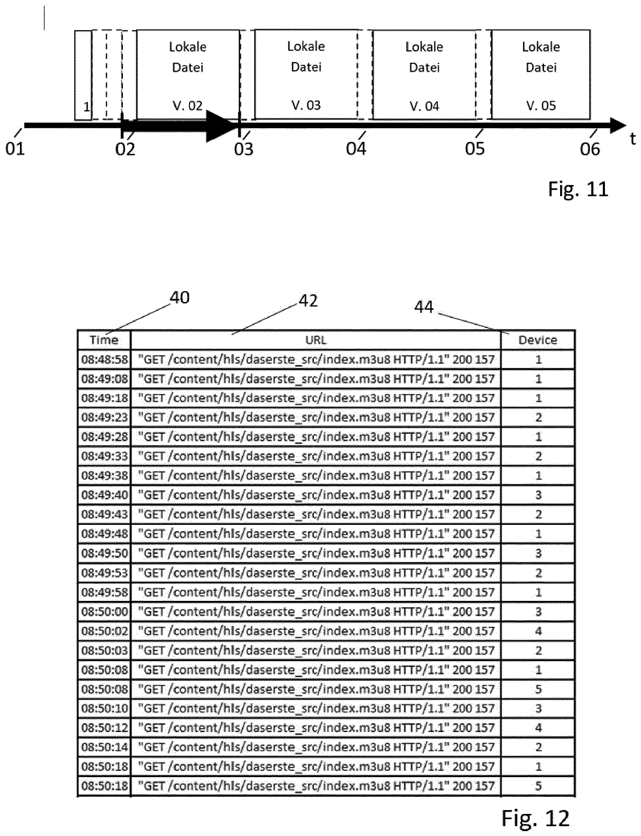

Fig. 11 zeigt ein neuartiges angepasstes Aktualisierungsintervall der Datei auf dem Zwischenspeicher. Da der Aktualisierungszeitpunkt der Datei auf dem Zwischenspeicher nicht bekannt ist, wird diese auch zeitnah nach der Aufnahme in den Cache bereits bei Folgezugriffen auf Aktualität überprüft. Ein typischer Zeitwert ist hier, dies Aktualität bereits nach unter einer Sekunde Verweildauer erneut zu prüfen. Hierdurch würde bei einem erneuten Zugriff auf diese Datei also maximal mit einem unter einer Sekunde liegenden Zeitversatz die aktuellste Version erkannt werden. Genau wenn eine aktualisierte Version der Datei gefunden wurde, kann der Reglungsalgorithmus aber wie folgt Rückschlüsse darüber anstellen, bis wann die Datei auf dem Webserver 120 nicht mehr aktualisiert wird: Hierzu wird der Zeitpunkt genommen, an dem das letzte Mal der Cache-Zugriff auf die vorhergehende Fassung der Datei erfolgte und dieser Zeitpunkt um die Segmentdauer S₀ erhöht. Für dieses Zeitintervall kann sicher ausgeschlossen werden, dass erneut eine Aktualisierung der Verwaltungsdatei erfolgen wird, da innerhalb der Segmentdauer S₀ keine zwei Aktualisierungen stattfinden.

Basierend auf diesem Cache-Algorithmus erfolgt, also unabhängig von der Anzahl der Endgeräte 100, nach einer Anlaufphase nur alle 10 Sekunden der Zugriff auf die entfernte Verwaltungsdatei, als der Verwaltungsdatei auf dem Webserver 120. Es wird also zunächst in kleinen Zeitintervallen überprüft, ob eine aktuelle Version der Datei auf dem Webserver 120 vorliegt, wodurch der Zeitpunkt der Abfrage der Datei auf dem Webserver 120 nahe an den tatsächlichen Aktualisierungszeitpunkt iterativ angeglichen wird. Da, wie vorstehend erläutert keine zwei Aktualisierungen innerhalb einer Segmentdauer S₀ stattfinden, kann die Dauer der weiteren Abfragen wieder auf die Segmentdauer S₀ ausgedehnt werden, um den IP-Traffic zu verringern. Lediglich, wenn ein neues Endgerät 100 hinzukommt erfolgt ggf. ein neuer frühzeitiger Zugriff auf die noch unveränderte entfernte Datei. Trotzdem ist der zusätzliche Zeitversatz durch dieses Caching bei unter einer Sekunde.

Fig. 12 zeigt eine Tabelle mit mehrfachen Zugriffen von fünf Endgeräten 100 auf die Datei im Zwischenspeicher. Die Spalte "Time" 40 gibt den Zeitpunkt an, wann das jeweilige Endgerät 100 auf die Datei zugreift. Die Spalte "URL" 42 kennzeichnet den Link zu dieser Datei und die Spalte "Device" 44 kennzeichnet, welches der fünf Endgeräte 100 auf die Datei zugreift. In diesem Beispiel in der Form eines "Access Log" ist gezeigt, wie nacheinander fünf Endgeräte 100 Zugriff auf die Verwaltungsdatei einer Sendung nehmen. Es ist hierbei zu erkennen, dass jedes Endgerät 100 exakt in einem 10 Sekunden-Takt die Datei erneut aus dem Cache lädt.

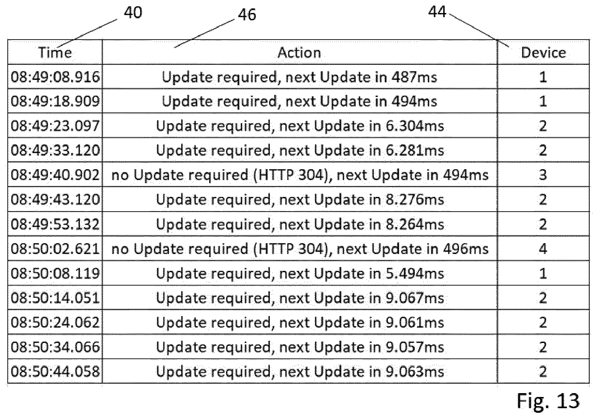

Fig. 13 zeigt die Aktualisierung der Datei auf dem Proxy durch einen Zugriff auf den Webserver 120 in Tabellenform. In der Log-Darstellung ist in der Spalte "Action" 46 zu erkennen, dass nicht jeder Zugriff tatsächlich zu einer Aktualisierung führt. Aufgrund der Zugriffe ist aus der Spalte 40 abzuleiten, dass die entfernte Datei, also die Datei auf dem Webserver 120, immer gegen "xx:xx:x3" aktualisiert wird. Es ist auch zu erkennen, wie nahezu optimal der erste lokale Zugriff nach der Aktualisierung dazu führt, dass die entfernte Datei neu geladen wird und Folgezugriffe aus dem Cache bedient werden.

Lediglich zum Zeitpunkt 08:50:03 (siehe Spalte 40 in Fig. 12) klappt dies einmal nicht, da unmittelbar davor zum Zeitpunkt 08:50:02 (Spalte 40 in Fig. 13) bereits eine Aktualisierung erfolglos versucht wurde. Dieses führt in der Folge dazu, dass das zugehörige Endgerät 100 zunächst die alte Verwaltungsdatei nochmals lädt und das nächste Echtzeitsegment 20 dann erst beim Folgezugriff mit 10 Sekunden Verspätung lädt. Genauer gesagt lädt dieses Endgerät 100 dann sogar gleich zwei Echtzeitsegmente 20 parallel, da in der Zwischenzeit zwei Änderungen der Verwaltungsdatei stattfanden. Ein solches Fehlverhalten kann aber auch bei direkten Zugriff ohne Proxy auftreten und zwar dann, wenn Zugriffzeitpunkt und Aktualisierungszeitpunkt sehr nahe beieinander liegen.

Proaktive Übertragung: Üblicherweise werden durch den Proxy 110 nur Playlisten und Echtzeitsegmente 20 geladen, nachdem diese durch das Endgerät 100 angefordert wurden. Hierdurch kommt es zu einer Verzögerung, da die Dateiübertragung erst ab der ersten Abfrage und nicht bereits ab der Verfügbarkeit erfolgt. In einer zweckmäßigen Erweiterung der Erfindung kann daher pro Stream/Sendung festgelegt werden, welche Bitraten 24 proaktiv, also ohne Anforderung durch ein Endgerät 100 übertragen werden. Im Rahmen einer Traffic-Priorisierung kann diese proaktive Übertragung gegenüber der On-Demand-Übertragung priorisiert werden, so dass bestimmte Bitraten 24 immer lokal verfügbar sind. Vorzugsweise wird für alle Live-Streams immer die niedrigste Qualitätsstufe proaktiv mit hoher Priorität zu übertragen. Mit der restlichen Bandbreite können dann On-Demand und/oder auch bessere Qualitätsstufen übertragen werden, wobei dann jederzeit der Rückfall zur niedrigsten Qualitätsstufe möglich ist, da diese dann auf jeden Fall lokal auf dem Proxy 110 vorliegt.

Kopplung der proaktiven Übertragung an den Zugriff auf die Datei, insbesondere die Verwaltungsdatei: Es ist unnötig, Echtzeitsegmente 20 proaktiv zu übertragen, die dann garantiert nicht abgerufen werden. Eine Möglichkeit, das zu verhindern ist es, die proaktive Übertragung an den Abruf der Verwaltungsdatei zu koppeln. Da der Player die URI für den Zugriff auf das jeweilige Echtzeitsegment 20 bei HLS aus der m3u8-Playlist erfährt, besteht ein direkter Kausalzusammenhang zwischen dem Download der Playlist und dem Übertragen eines darin aufgeführten Echtzeitsegmentes 20. Sofern die Playlist nicht abgerufen wird, kann ein Zugriff auf das jeweilige Echtzeitsegment 20 ausgeschlossen werden und es muss auch nicht proaktiv übertragen werden, wodurch der Datenstrom reduziert wird.

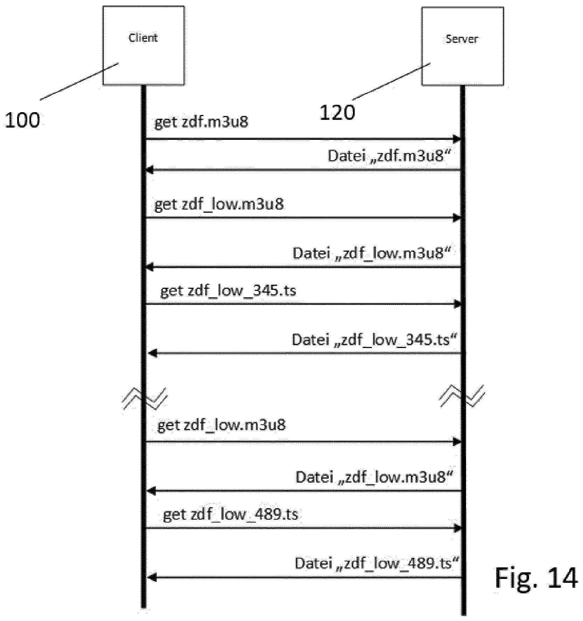

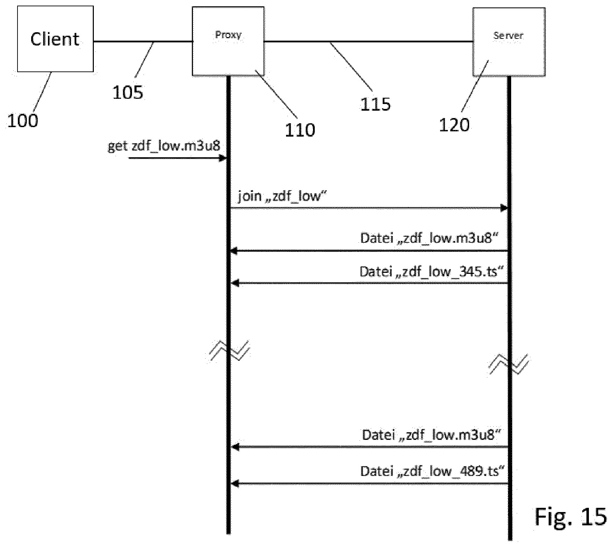

Fig. 14 zeigt schematisch ein typisches Aufrufverhalten des Endgeräts 100, wobei regelmäßig ein Update der Verwaltungsdatei, hier "content_low.m3u8" angefragt wird, um dann das jeweils neu darin enthaltene Echtzeitsegment 20 dieser Qualitätsstufe zu laden. Fig. 15 zeigt das neuartige Aufrufverhalten des Proxy 110. Für den Proxy 110 reicht bereits ein Zugriff auf die "zdf_low.m3u8"-Datei aus, um abzuleiten, ob die Segmente 20 und die Playliste in dieser Qualitätsstufe benötigt werden. Insofern können ab diesen Zeitpunkt die Playlist und die Echtzeitsegmente 20 proaktiv an den Proxy 110 übertragen werden - unabhängig davon, wann der konkrete Abruf durch das Endgerät 100 erfolgt. Eine mögliche technische Realisierung besteht darin, dass der Webserver 120 diese Dateien per Multicast anbietet und der Proxy 110 über "join" und "leave"-Befehle diesen Multicast bei Bedarf abonnieren kann.

Die Vorteile der Erfindung werden nun noch einmal gargelegt:
Durch den Einsatz des Verfahrens ist es möglich auch große Hotels mit einer überschaubaren Bandbreite, z.B. einem DSL50/100 Anschluss, per Cloud mit TV zu versorgen und so den Aufbau einer lokalen Empfangsanlage einzusparen. Hierbei lässt sich folgendes technisches Ergebnis der Erfindung erzielen:
- Wenn tagsüber nur wenige Gäste TV sehen, können dabei alle Endgeräte mit maximaler Qualität direkt aus der Cloud versorgt werden.
- Wenn beispielsweise ein Fußball-Länderspiel übertragen wird, stellt der Proxy sicher, dass der zugehörige Stream ggf. nur einmal übertragen und an alle Gäste verteilt wird. Außerdem wird durch die hohe Anzahl der Clients diese Übertragung in bestmöglicher Qualität erfolgen, selbst wenn bei anderen Kanälen einzelne Qualitätsstufen abgeschaltet werden.
- Sofern viele Gäste gleichzeitig durch das Programm zappen, werden gleichzeitig viele verschiedene Sender benötigt. Hier reicht die Bandbreite nicht aus, alle Sender in bester Qualität zu übertragen. Trotzdem werden die Sendungen, die nicht nur von einzelnen Gästen gesehen werden, weiterhin in guter Qualität angeboten.
- Die Streams lassen sich ohne zusätzlichen technischen Aufwand auch in Smartphones wiedergeben. Insofern kann ein Hotel ohne zusätzlichen Bandbreitenbedarf auch den TV Empfang über die Endgeräte der Gäste parallel mitanbieten.

## Patentansprüche

1. Verfahren zur Koordinierung der Übertragung von Echtzeitsegmenten von Sendungen, insbesondere von Live-Streams, aus dem Internet oder aus einer anderen angebundenen Signalquelle an mehrere Endgeräte zur gemeinsamen Nutzung,
wobei ein Webserver (120) vorgesehen ist, auf dem die Echtzeitsegmente (20) der Sendungen in unterschiedlichen Bitraten (24) vorgehalten werden,
wobei die Endgeräte (100) über einen Proxy (110), auf dem ein Reglungsalgorithmus implementiert ist, mit dem Webserver (120) verbunden sind, wobei auf einem Zwischenspeicher des Proxys eine Teilmenge der Bitraten (24) geladen sind,
wobei an jedes Endgerät (100) die ihm zugeordneten Echtzeitsegmente (20) der Sendung übertragen werden,
wobei ein erstes Endgerät (100) die Echtzeitsegmente (20) mit einer ersten Bitrate (24b) und ein zweites Endgerät die Echtzeitsegmente mit einer zweiten Bitrate (24a) anfordert,
wobei der Reglungsalgorithmus dem zweiten Endgerät (100) die Sendung mit der ersten Bitrate zuordnet (24b) und die Echtzeitsegmente (20) mit der ersten Bitrate (24b) von dem Zwischenspeicher des Proxys an das zweite Endgerät (100) übertragen werden,
**dadurch gekennzeichnet,**
**dass** die erste Bitrate (24b) eine höhere Qualitätsstufe als die zweite Bitrate (24a) aufweist, wobei sichergestellt wird, dass die höhere Bandbreite Ende-zu-Ende über eine zweite Datenverbindung (105) an das Endgerät (100) übertragbar ist.

2. Verfahren nach einem der vorhergehenden Ansprüche, **dadurch gekennzeichnet, dass** die Echtzeitsegmente (20) von dem Webserver (120) an den Proxy (110) mittels einer ersten Datenverbindung (115) und von dem Proxy (110) an die Endgeräte (100) mittels einer zweiten (105) Datenverbindung übertragen werden.

3. Verfahren nach Anspruch 2, **dadurch gekennzeichnet, dass** der Reglungsalgorithmus die gesamte, von den Endgeräten (100) angeforderte, Bitrate (24) mit der verfügbaren Bitrate (24) der ersten Datenverbindung (115) vergleicht.

4. Verfahren nach einem der vorhergehenden Ansprüche, **dadurch gekennzeichnet, dass** durch den Reglungsalgorithmus keine identischen Echtzeitsegmente (20) in den Zwischenspeicher des Proxys heruntergeladen werden.

5. Verfahren nach einem der vorhergehenden Ansprüche, **dadurch gekennzeichnet, dass** der Reglungsalgorithmus erkennt, wenn zumindest zwei Endgeräte (100) Echtzeitsegmente (20) einer identischen Sendung in unterschiedlicher und/oder gleicher Bitrate (24) anfordern.

6. Verfahren nach Anspruch 5, **dadurch gekennzeichnet, dass** von der zumindest einen identischen Sendungen inhaltlich identische Echtzeitsegmente (20) in einer anderen Bitrate (24) in den Zwischenspeicher heruntergeladen werden als die, welche von dem zweiten Endgerät (100) angefordert wurde.

7. Verfahren nach einem der vorhergehenden Ansprüche, **dadurch gekennzeichnet, dass** der Reglungsalgorithmus analysiert, wie oft ein bestimmtes Echtzeitsegment (20) in einer bestimmten Bitrate (24) von den Endgeräten (100) angefordert wird und hieraus eine Priorisierung der Sendungen erstellt.

8. Verfahren nach Anspruch 7, **dadurch gekennzeichnet, dass** bei einer Überschreitung der verfügbaren Bitrate (24) die Echtzeitsegmente (20) entsprechend der Priorisierung in die Auswahl des Zwischenspeichers geladen werden.

9. System zur Koordinierung der Übertragung von Echtzeitdatenpaketen von Sendungen, insbesondere von Live-Streams, aus dem Internet geeignet zur Durchführung eines Verfahrens nach einem der Ansprüche 1 bis 8.

10. System nach Anspruch 9, **dadurch gekennzeichnet, dass** die erste und/oder die zweite Datenverbindung (115, 105) sowohl kabelgebundene als auch kabellose Datenübertragungen umfasst.

## Claims

1. Method for coordinating the transmission of real-time segments of broadcasts, in particular of live-streams, from the internet or from another connected signal source, to multiple end devices for common use,
wherein a web server (120) is provided, on which the real-time segments (20) of the broadcasts are maintained in different bit rates (24),
wherein the end devices (100) are connected to the web server (120) via a proxy (110), on which a control algorithm is implemented,
wherein a subset of the bit rates (24) are loaded on a cache memory of the proxy,
wherein the real-time segments (20) of the broadcast assigned to each end device (100) are transmitted to that device,
wherein a first end device (100) requests the real-time segments (20) with a first bit rate (24b) and a second end device requests the real-time segments with a second bit rate (24a),
wherein the control algorithm assigns the broadcast with the first bit rate (24b) to the second end device (100), and the real-time segments (20) with the first bit rate (24b) are transmitted to the second end device (100) from the cache memory of the proxy,
**characterized in that**
the first bit rate (24b) has a higher quality level than the second bit rate (24a), wherein it is assured that the higher bandwidth can be transmitted end-to-end to the end device (100) via a second data link (105).

2. Method according to one of the preceding claims, **characterized in that** the real-time segments (20) are transmitted by the web server (120) to the proxy (110) via a first data link (115) and by the proxy (110) to the end devices (100) via a second data link (105).

3. Method according to Claim 2, **characterized in that** the control algorithm compares the entire bit rate (24) requested by the end devices (100) with the available bit rate (24) of the first data link (115).

4. Method according to any one of the preceding claims, **characterized in that** no identical real-time segments (20) are downloaded to the cache memory of the proxy by the control algorithm.

5. Method according to any one of the preceding claims, **characterized in that** the control algorithm detects when at least two end devices (100) request real-time segments (20) of an identical broadcast in a different and/or the same bit rate (24).

6. Method according to Claim 5, **characterized in that** of the at least one identical broadcasts, real-time segments (20) with identical contents are downloaded to the cache memory in a different bit rate (24) from those that were requested by the second end device (100).

7. Method according to any one of the preceding claims, **characterized in that** the control algorithm analyses how often a certain real-time segment (20) is requested in a certain bit rate (24) by the end devices (100), and from this creates a prioritisation of the broadcasts.

8. Method according to Claim 7, **characterized in that** when the available bit rate (24) is exceeded, the real-time segments (20) are loaded into the cache memory selection according to the prioritisation.

9. System for coordinating the transmission of real-time data packets of broadcasts, in particular of live-streams, from the internet, suitable for carrying out a method according to any one of Claims 1 to 8.

10. System according to Claim 9, **characterized in that** the first and/or the second data link (115, 105) comprises both wired and wireless data transmissions.

## Revendications

1. Procédé de coordination de la transmission de segments en temps réel d'émissions, notamment de flux en direct, depuis Internet ou d'une autre source de signal connectée à plusieurs terminaux en vue du partage,
dans lequel un serveur Web (120) est prévu sur lequel les segments en temps réel (20) des programmes sont conservés à différents débits binaires (24),
dans lequel les terminaux (100) via un proxy (110), sur lequel un algorithme de contrôle est implémenté, sont connectés au serveur web (120), dans lequel un sous-ensemble des débits binaires (24) est chargé sur un cache du proxy,
dans lequel à chaque terminal (100) sont transmis les segments en temps réel (20) de l'émission lui étant attribué,
dans lequel un premier terminal (100) demande les segments en temps réel (20) à un premier débit binaire (24b) et un deuxième terminal demande les segments en temps réel à un deuxième débit binaire (24a),
dans lequel l'algorithme de contrôle envoie au deuxième terminal (100) l'émission avec le premier débit binaire (24b) et les segments en temps réel (20) avec le premier débit binaire (24b) sont transmis du cache du proxy au deuxième terminal (100),
**caractérisé en ce que** le premier débit binaire (24b) présente un niveau de qualité supérieur au deuxième débit binaire (24a), ce qui assure que la bande passante la plus haute peut être transmise de bout en bout via une deuxième connexion de données (105) au terminal (100).

2. Procédé selon une quelconque des revendications précédentes, **caractérisé en ce que** les segments en temps réel (20) sont transmis du serveur web (120) au proxy (110) au moyen d'une première connexion de données (115) et du proxy (110) aux terminaux (100) au moyen d'une deuxième (105) connexion de données.

3. Procédé selon la revendication 2, **caractérisé en ce que** l'algorithme de contrôle compare tout le débit binaire (24) demandé par les terminaux (100) au débit binaire disponible (24) de la première connexion de données (115).

4. Procédé selon une des revendications précédentes, **caractérisé en ce qu'**aucun segment en temps réel identique (20) n'est téléchargé dans le cache du proxy par l'algorithme de contrôle.

5. Procédé selon une quelconque des revendications précédentes, **caractérisé en ce que** l'algorithme de contrôle reconnaît lorsqu'au moins deux terminaux (100) demandent des segments en temps réel (20) d'un programme identique dans un débit binaire différent et/ou identique (24).

6. Procédé selon la revendication 5, **caractérisé en ce que** les segments en temps réel (20) aux contenus identiques à au moins une émission identique sont téléchargés dans le cache dans un débit binaire différent (24) de celui demandé par le deuxième terminal (100).

7. Procédé selon une des revendications précédentes, **caractérisé en ce que** l'algorithme de contrôle analyse la fréquence à laquelle un segment en temps réel spécifique (20) dans un débit binaire spécifique (24) est demandé par les terminaux (100) et à partir de là une priorisation des émissions est créée.

8. Procédé selon la revendication 7, **caractérisé en ce que** lorsque le débit disponible (24) est dépassé, les segments en temps réel (20) sont chargés dans la sélection du cache selon la priorisation.

9. Système de coordination de la transmission de paquets de données en temps réel à partir d'émissions, notamment de flux en direct, depuis Internet, adapté à la mise en œuvre d'un procédé selon une quelconque des revendications

10. Système selon la revendication 9, **caractérisé en ce que** la première et/ou la deuxième connexion de données (115, 105) comprend à la fois des transmissions de données filaires et sans fil.
